# EUROPÄISCHE PATENTSCHRIFT

(11) **EP 2 512 924 B1**
(45) Veröffentlichungstag und Bekanntmachung des Hinweises auf die Patenterteilung: **18.04.2018**
(21) Anmeldenummer: 10790752.9
(22) Anmeldetag: 08.12.2010
(51) Int. Cl.: B64D 11/00, B64D 11/06, G01D 5/20, G01B 7/14

(54) **LUFT- ODER RAUMFAHRZEUG SOWIE VERFAHREN ZUM MESSEN EINER IST-POSITION EINES ZWEITEN FAHRZEUGTEILS RELATIV ZU EINEM ERSTEN FAHRZEUGTEIL**
AIR- OR SPACECRAFT AND METHOD FOR MEASURING A CURRENT POSITION OF SECOND VEHICLE PART WITH RESPECT TO A FIRST VEHICLE PART
VEHICULE AERIEN OU SPATIAL ET PROCEDE POUR MESURER UNE POSITION ACTUELLE D'UNE SECONDE PART D'UN VEHICULE PAR RAPPORT A UNE PREMIERE PART D'UN VEHICULE

(30) Priorität: 15.12.2009 DE 102009054700; 15.12.2009 US 286496 P
(43) Veröffentlichungstag der Anmeldung: 24.10.2012
(73) Patentinhaber: Airbus Operations GmbH, 21129 Hamburg (DE)
(72) Erfinder: BAUER, Hans-Achim, 21037 Hamburg (DE); ZYBALA, Andre, 21271 Hanstedt (DE)
(74) Vertreter: Isarpatent
(86) Internationale Anmeldenummer: PCT/EP2010/069124
(87) Internationale Veröffentlichungsnummer: WO 2011/073063

(56) Entgegenhaltungen:
- WO-A1-2004/052689
- DE-A1- 10 149 331
- DE-A1-102008 024 217
- GB-A- 2 327 914

## Beschreibung

Die vorliegende Erfindung bezieht sich auf ein Luft- oder Raumfahrzeug sowie auf ein Verfahren zum Messen einer Ist-Position eines zweiten Fahrzeugteils relativ zu einem ersten Fahrzeugteil für ein Luft- oder Raumfahrzeug. Sitze für Passagiere werden gemäß einer der Anmelderin intern bekannten Lösung auf einem Schienensystem in der Kabine eines Flugzeugs montiert, siehe DE 10 2008 024 217 A1. Die Schienen des Schienensystems weisen gewöhnlich ein Raster von 2,54 cm in Längsrichtung der Kabine auf, welches mit Arretiermitteln der Sitze in Eingriff bringbar ist, um die Sitze an unterschiedlichen Positionen entlang der Schienen zu arretieren. Eine solche flexible Positionierbarkeit der Sitze ist erforderlich, um den unterschiedlichen Kundenwünschen gerecht werden zu können.

Eine Veränderung der Position der Sitze - zum Beispiel wegen einer Veränderung der Anzahl der Sitzreihen auf den Wunsch eines Kunden hin - erfordert aber gleichzeitig auch eine Veränderung der Position verschiedener Einrichtungen, welche einem jeweiligen Sitz zugeordnet sind. Beispiele für solche Einrichtungen sind eine Sitznummernanzeige, eine Lesebeleuchtung und ein Knopf zum Ruf eines Flugbegleiters (Englisch: pax-call) .

Die Veränderung der Position der, den Sitzen zugeordneten Einrichtungen findet derzeit vollkommen manuell statt und ist daher mit einem hohen Zeit- und Kostenaufwand verbunden.

Aufgabe der vorliegenden Erfindung ist es, die vorgenannten Nachteile zu beseitigen oder zumindest zu verringern.

Erfindungsgemäß wird diese Aufgabe durch ein Luft- oder Raumfahrzeug mit den Merkmalen des Patentanspruchs 1 und/oder durch ein Verfahren mit den Merkmalen des Patentanspruchs 6 gelöst.

Demgemäß wird ein Luft- und Raumfahrzeug mit einem System bereitgestellt, welches Folgendes aufweist: ein erstes Fahrzeugteil, welches eine oder mehrere Primärwicklungen aufweist; ein zweites Fahrzeugteil, welches eine oder mehrere Sekundärwicklungen für ein magnetisches Wechselwirken mit der einen den mehreren Primärwicklungen aufweist und relativ zu dem ersten Fahrzeugteil an verschiedenen Positionen anordbar ist; eine Energieversorgungseinrichtung, welche dazu eingerichtet ist, in einem ersten Modus des Systems die eine oder mehreren Primärwicklungen mit einer Spannung oder einem Strom zu beaufschlagen; eine Messeinrichtung, welche dazu eingerichtet ist, einen resultierenden, durch die eine oder mehreren Primärwicklungen fließenden Strom bzw. eine resultierende, an der einen oder den mehreren Primärwicklungen anliegende Spannung zu messen; und eine Auswerteeinrichtung, welche in Abhängigkeit von dem resultierenden Strom oder der resultierenden Spannung eine Ist-Position des zweiten Fahrzeugteils relativ zu dem ersten Fahrzeugteil ermittelt.

Weiterhin wird ein Verfahren zum Messen einer Ist-Position eines zweiten Fahrzeugteils relativ zu einem ersten Fahrzeugteil, insbesondere für ein Luft- oder Raumfahrzeug, bereitgestellt, welches folgende Schritte aufweist: Anordnen des zweiten Fahrzeugteils, welches eine oder mehrere Sekundärwicklungen aufweist, benachbart zu dem ersten Fahrzeugteil, welches eine oder mehrere Primärwicklungen aufweist, so dass wenigstens eine Sekundärwicklung mit wenigstens einer Primärwicklung magnetisch wechselwirkt; Beaufschlagen der einen oder mehreren Primärwicklungen mit einer Spannung oder einem Strom; Messen eines resultierenden, durch die eine oder mehreren Primärwicklungen fließenden Stroms bzw. einer resultierenden, an der einen oder den mehreren Primärwicklungen anliegenden Spannung; und Ermitteln der Ist-Position des zweiten Fahrzeugteils relativ zu dem ersten Fahrzeugteil in Abhängigkeit von dem resultierenden Strom bzw. der resultierenden Spannung.

Die der vorliegenden Erfindung zugrundeliegende Idee besteht darin, eine automatisierte Messung der Position des zweiten Fahrzeugteils relativ zu dem ersten Fahrzeugteil vorzusehen. Beispielsweise kann somit bei dem einleitend beschriebenen Flugzeug die Position eines Sitzes relativ zu dem Kabinenboden oder dem Schienensystem automatisch erfasst werden. Dies erlaubt es, beispielsweise an der neuen Ist-Position des Sitzes dessen Sitznummer automatisch anzuzeigen. Dazu kann beispielsweise eine Vielzahl von Sitznummernanzeigen in Form von LCD-Bildschirmen entlang der Kabine mit einem geringen Abstand angeordnet werden. Die der neuen Ist-Position des Sitzes am nächsten kommende Sitznummernanzeige kann dann zur Anzeige der Sitznummer des Sitzes geschaltet werden.

Ferner schaffen das erfindungsgemäße Luft- oder Raumfahrzeug und/oder das erfindungsgemäße Verfahren die Grundlage, um beispielsweise nach einer Montage der eingangs genannten Sitze auf dem Schienensystem zu überprüfen, ob die Ist-Position eines Sitzes auch mit dessen Soll-Position übereinstimmt.

Demnach sind das erfindungsgemäße Luft- oder Raumfahrzeug und/oder das erfindungsgemäße Verfahren dazu geeignet, einen manuellen Aufwand und damit Kosten zu reduzieren.

In den Unteransprüchen finden sich vorteilhafte Weiterbildungen der Erfindung. Gemäß der Erfindung ist die Messeinrichtung dazu eingerichtet, den resultierenden Strom bzw. die resultierende Spannung an jeder der mehreren Primärwicklungen einzeln zu messen. Dadurch lässt sich einfach feststellen, welche der Primärwicklungen durch eine oder mehrere der Sekundärwicklungen magnetisch beeinflusst ist.

Gemäß einer weiter bevorzugten Weiterbildung des erfindungsgemäßen Luft- oder Raumfahrzeugs ist eine Rechnereinrichtung als ein Kabinenmanagementsystem und/oder ein Im-Flug-Unterhaltungssystem des Luft- oder Raumfahrzeugs ausgebildet. Unter einem "Kabinenmanagementsystem" ist vorliegend ein solches System zu verstehen, welches nahezu sämtliche Einrichtungen in der Kabine steuert, beispielsweise eine Klimaanlage, eine Kabinenbeleuchtung oder die Verarbeitung von Pax-Calls. Ein Kabinenmanagementsystem der Anmelderin ist auch unter dem Namen "CIDS" (Cabin Intercommunication Data System) bekannt. Im-Flug-Unterhaltungssysteme (Englisch: In-Flight-Entertainment-Systems) dienen der Bereitstellung von Unterhaltungsprogrammen, beispielsweise Filme oder Computerspiele, an die Passagiere.

Dadurch, dass das Kabinenmanagementsystem und/oder das Im-Flug-Unterhaltungssystem gemäß dieser Weiterbildung mit dem Datenein- und/oder Datenausgabegerät des zweiten Fahrzeugteils verbunden ist, können mittels dem Datenein- und/oder Datenausgabegerät beispielsweise kabinenrelevante Funktionen, insbesondere Pax-Calls, gesteuert werden, oder es können beispielsweise Filme auf diesem angezeigt werden.

Gemäß der Erfindung stellt die Auswerteeinrichtung die Ist-Position des zweiten Fahrzeugteils einem Kabinenmanagementsystem des Luft- oder Raumfahrzeugs bereit. Das Kabinenmanagementsystem aktiviert dann passagierrelevante Einrichtungen, welche der Ist-Position zugeordnet sind. Mit "Aktivieren" ist vorliegend vorzugsweise gemeint, dass die Einrichtung ein- oder ausgeschaltet ist. Beispielsweise würde eine Sitznummeranzeige im Bereich der neuen Ist-Position des Sitzes typischerweise eingeschaltet werden. Mit "Aktivieren" ist vorliegend vorzugsweise aber auch gemeint, dass die Einrichtung durch den Passagier in Betrieb nehmbar ist. Beispielsweise wird eine Lesebeleuchtung an der alten Ist-Position permanent ausgeschaltet, während eine Lesebeleuchtung an der neuen Ist-Position derart geschaltet wird, dass diese von dem Passagier ein- und ausgeschaltet werden kann.

Gemäß einer bevorzugten Weiterbildung des erfindungsgemäßen Luft- oder Raumfahrzeugs sind die passagierrelevanten Einrichtungen als Passagierserviceeinheiten ausgebildet. Vorzugsweise werden beispielsweise mehr Passagierserviceeinheiten (Englisch: PSU bzw. Passenger Service Unit) vorgesehen, als Sitze vorhanden sind. Beispielsweise aktiviert das Kabinenmanagementsystem dann die Passagierserviceeinheiten, welche der neuen Ist-Position eines jeweiligen Sitzes am nächsten kommt. Damit entfällt ein Umpositionieren der Passagierserviceeinheiten. Unter einer "Passagierserviceeinheit" ist vorliegend ein Modul zu verstehen, welches eine Summe passagierrelevanter Funktionen erfüllt, beispielsweise die Bereitstellung von Leselicht und akustischen und/oder visuellen Informationen.

Gemäß einer weiter bevorzugten Weiterbildung des erfindungsgemäßen Luft- oder Raumfahrzeugs ist eine Vergleichereinrichtung Bestandteil eines Kabinenmanagementsystems des Luft- oder Raumfahrzeugs. Zum Beispiel kann dadurch eine von der Vergleichereinrichtung erzeugte Fehlermeldung einfach mittels einer Anzeigeeinrichtung, beispielsweise mittels eines Flugbegleiterdatenein- und ausgabegeräts (Englisch: flight attendent panel), angezeigt werden, welche ein Kabinenmanagementsystem bereits standardmäßig aufweist.

Gemäß einer weiter bevorzugten Weiterbildung des erfindungsgemäßen Luft- oder Raumfahrzeugs ist das erste Fahrzeugteil als ein Sitz und das zweite Fahrzeugteil als eine Sitzschiene oder ein Kabinenboden des Luft- oder Raumfahrzeugs ausgebildet.

Gemäß einer bevorzugten Weiterbildung des erfindungsgemäßen Verfahrens werden Energie und/oder Daten mittels der einen oder mehreren Primär- und Sekundärwicklungen auf einen Verbraucher bzw. auf ein Datenein- und/oder Datenausgabegerät des zweiten Fahrzeugteils übertragen.

Die Erfindung wird nachfolgend anhand von Ausführungsbeispielen unter Bezugnahme auf die beiliegenden Figuren der Zeichnung näher erläutert.

Es zeigen:
- Fig. 1: schematisch ein System gemäß einem Ausführungsbeispiel der vorliegenden Erfindung;
- Fig. 2: eine perspektivische Ansicht eines Schienensystems aus Fig. 1; und
- Fig. 3: unterschiedliche Messwerte für die Primärwicklungen P1, P2 und P3 aus Fig. 1.

In den Figuren sind gleiche oder funktionsgleiche Komponenten mit denselben Bezugszeichen bezeichnet, soweit nichts Gegenteiliges angegeben ist.

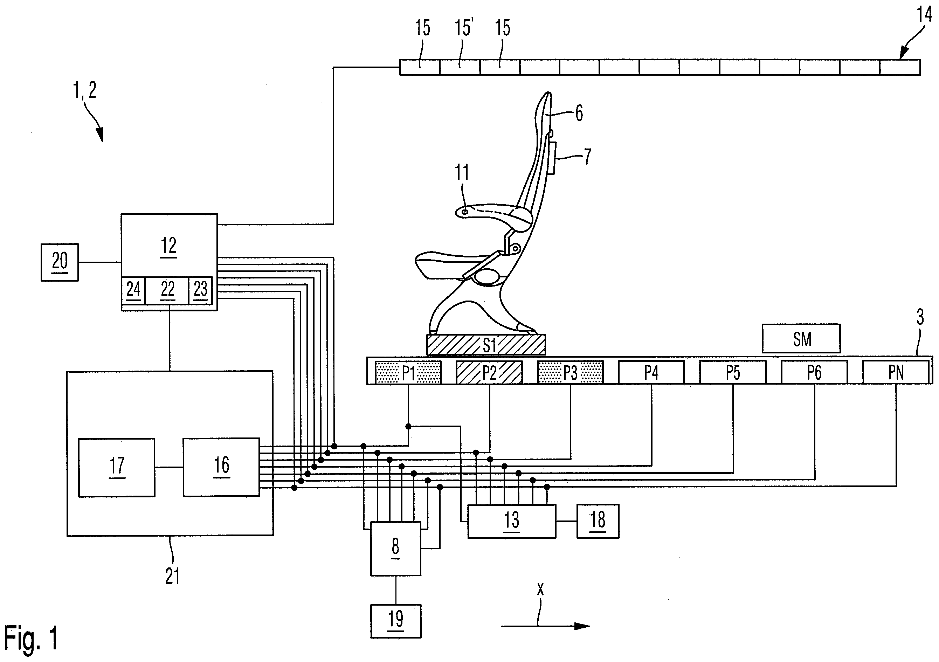

In Fig. 1 sind elektrische Leitungen als durchgezogene Linien dargestellt. Schnittpunkte der Leitungen sind durch einen ausgefüllten Kreis kenntlich gemacht.

Fig. 1 zeigt ein System 1 gemäß einem bevorzugten Ausführungsbeispiel der vorliegenden Erfindung. Das System 1 ist Bestandteil eines nicht näher dargestellten Flugzeugs 2.

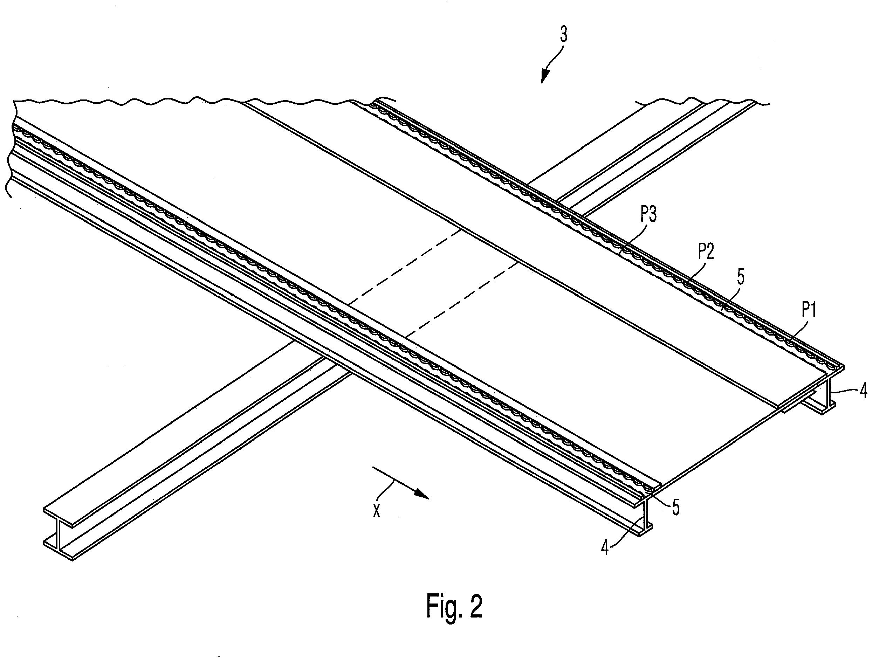

Das System 1 weist ein Schienensystem 3 auf, welches beispielsweise im Bereich des Kabinenbodens des Flugzeugs 2 angeordnet ist. Das Schienensystem 3 weist eine Vielzahl von Primärwicklungen P1 bis PN auf, welche gleichmäßig voneinander beabstandet entlang der Längsachse X des Flugzeugs 2 angeordnet sind. Dies ist auch in Fig. 2 gezeigt, welche eine perspektivische Ansicht des Schienensystems 3 aus Fig. 1 zeigt.

Wie Fig. 2 zu entnehmen, weist das Schienensystem 3 beispielsweise zwei Schienen 4 auf. Die Schienen 4 sind jeweils mit einem Raster 5 für ein Zusammenwirken mit nicht näher dargestellten Arretiermitteln von Sitzen 6 des Flugzeugs 2 ausgebildet, wobei in Fig. 1 nur ein Sitz 6 beispielhaft dargestellt ist. Die Raster 5 erlauben zusammen mit den Arretiermitteln der Sitze 6 eine flexible Positionierung dieser entlang der Längsachse X.

Die Sitze 6 weisen Sekundärwicklungen S1-SM auf. Beispielsweise können einem Sitz 6 Sekundärwicklungen S1, S2 und S3 zugeordnet sein. Der Einfachheit halber ist dem Sitz 6 gemäß dem vorliegenden Ausführungsbeispiel aber lediglich eine Sekundärwicklung S1 zugeordnet. Der Sitz 6 ist mit der Sekundärwicklung S1 fest verbunden. Das heißt, dass wenn der Sitz 6 für eine Umpositionierung desselben entlang der Raster 5 bewegt wird, sich die Sekundärwicklung S1 mit diesem mitbewegt.

Der Sitz 6 weist ferner ein Datenein- und ausgabegerät in Form eines Touchscreens 7 auf. Der Touchscreen 7 ist mit einem Im-Flug-Unterhaltungssystem 8 des Flugzeugs 2 verbunden. Auf dem Touchscreen 7 können daher beispielsweise Filme sowohl angezeigt als auch ausgesucht werden, beispielsweise mittels Drücken auf den Touchscreens 7.

Der Sitz 6 weist ferner ein Datenein- und ausgabegerät in Form eines Paxknopfes 11 auf. Der Paxknopf 11 ist mit einem Kabinenmanagementsystem 12 verbunden.

Der Paxknopf 11 sowie der Touchscreen 7 sind ferner mit einer Energieversorgungseinrichtung 13 verbunden. Der Touchscreen 7 und der Paxknopf 11 stellen Verbraucher von elektrischer Energie dar.

Oberhalb des Sitzes 6, beispielsweise in einem Versorgungskanal 14 des Flugzeugs 2, sind eine Vielzahl von Passagierversorgungseinheiten 15, 15' angeordnet. Die Passagierserviceeinheiten 15, 15' sind mit dem Kabinenmanagementsystem 12 für ein Steuern derselben verbunden.

Jede der Primärwicklungen P1-PN ist mit einer Messeinrichtung 16 verbunden. Die Messeinrichtung 16 ist wiederum mit einer Auswerteeinrichtung 17 verbunden. Die Primärwicklungen P1-PN sind ferner mit der Energieversorgungseinrichtung 13 verbunden, welche dazu eingerichtet ist, an diesen eine Wechselspannung anzulegen.

Die Messeinrichtung 16 und die Auswerteeinrichtung 17 können zusammen eine Steuereinheit 21 bilden, welche mit dem Kabinenmanagementsystem 12 verbunden ist. Alternativ kann auch beispielsweise die Auswerteeinheit 17 und/oder die Messeinrichtung 16 Bestandteil des Kabinenmanagementsystems 12 sein.

Nach der vorstehenden im Wesentlichen konstruktiven Beschreibung des Systems 1 bzw. des Flugzeugs 2 wird nachfolgend dessen Funktionsweise näher erläutert.

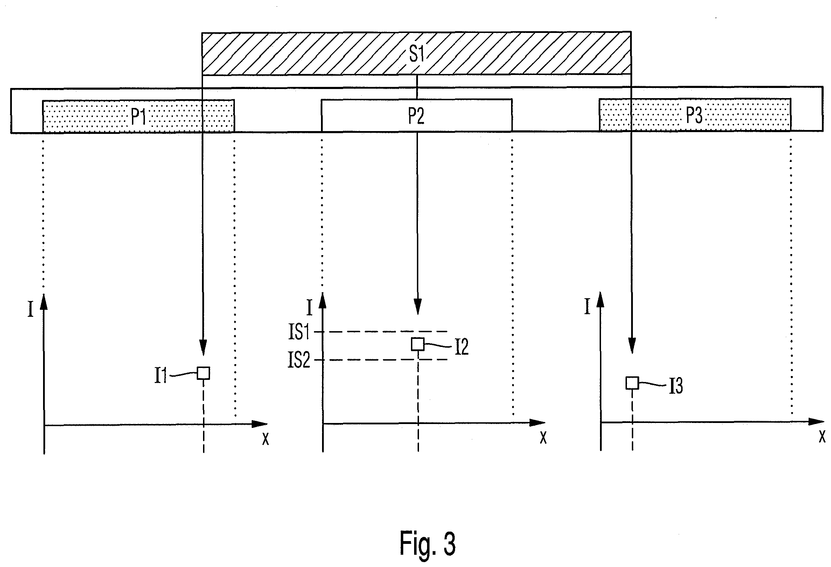

Um eine Ist-Position des Sitzes 6 zu messen, beaufschlagt die Energieversorgungseinrichtung 13 jede der Primärwicklungen P1-PN mit einer definierten Spannung. Aufgrund des teilweisen Überlappens der Sekundärwicklung S1 mit den Primärwicklungen P1 und P3 und des vollständigen Überlappens der Sekundärwicklung S1 mit der Primärwicklung P2 weisen die Primärwicklungen P1, P2 und P3 gegenüber den freien Primärwicklungen, beispielsweise P4 und P5, eine andere Impedanz auf. Dies wiederum führt dazu, dass sich der Stromfluss durch die Primärwicklungen P1, P2 und P3 von dem durch die freien Primärwicklunge, beispielsweise P4 und P5, unterscheidet. Der für die jeweiligen Primärwicklungen P1, P2 und P3 resultierende Strom I1, I2 bzw. I3 ist in Fig. 3 schematisch dargestellt. Die Diagramme unterhalb den Primärwicklungen P1, P2 und P3 zeigen die Stromstärke I durch die Primärwicklungen P1, P2 und P3 für eine Position X des Sekundärelements S1 bezüglich der jeweiligen Primärwicklungen P1, P2 und P3.

Die Messeinrichtung 16 misst die resultierenden Ströme I1 bis IN. Die Auswerteeinrichtung 17 ermittelt anhand der Ströme I1 bis IN die Position X der Sekundärwicklungen S1 und damit des Sitzes 6 in Bezug auf die Primärwicklungen P1-PN und damit bezüglich des Schienensystems 3. Insbesondere soll die Auswerteeinrichtung 17 dazu eingerichtet sein, zu erkennen, dass, wenn der Strom zwischen einem ersten Schwellwert IS1 und einem zweiten Schwellwert IS2 liegt, eine vollständige Überlappung zwischen einer Sekundärwicklung S1-SM und einer Primärwicklung P1-PN besteht, wie dies beispielhaft in Fig. 3 für die Primärwicklung P2 veranschaulicht ist. Ferner soll die Auswerteeinrichtung 17 dazu eingerichtet sein, in Abhängigkeit von dem resultierenden Strom I festzustellen, inwieweit eine Primärwicklung mit einer Sekundärwicklung überlappt, wie in Fig. 3 für die Primärwicklungen P1 und P3 dargestellt. Die Auswerteeinrichtung 17 ermittelt demnach anhand der Ströme I1, I2 und I3 die genaue Position des Sitzes 6 entlang der Längsachse X bezüglich des Schienensystems 3.

Die Ist-Position der Sitze 6 gibt die Auswerteeinrichtung 17 vorzugsweise an das Kabinenmanagementsystem 12 weiter. Dieses schaltet dann die Passagierserviceeinheiten 15 aktiv, welche der Ist-Position eines jeweiligen Sitzes 6 zugeordnet sind. Im Falle des vorliegenden Ausführungsbeispiels ist dies die Passagierserviceeinheit 15', da diese für einen auf dem Sitz 6 sitzenden Passagier am besten zugänglich ist. Nach dem Aktivschalten der Passagierserviceeinheit 15' kann diese von dem Passagier bedient werden; beispielsweise können nach dem Aktivschalten Leselampen derselben ein- und ausgeschaltet werden. Ferner kann auf einem nicht dargestellten Bildschirm der Passagierserviceeinheit 15' die Sitznummer des Sitzes 6 angezeigt werden, welche das Kabinenmanagementsystem 12 auf Basis der Ist-Positionen aller Sitze 6 in der Kabine ermittelt.

Die Ermittlung der Ist-Position des Sitzes 6 wie vorstehend beschrieben findet in einem ersten Modus des Systems 1 statt.

In einem zweiten Modus des Systems 2 liefert die Energieversorgungseinrichtung 13 Energie zum Betreiben des Touchscreens 7 und des Paxknopfes 11 mittels der Primärwicklungen P1, P2 und P3 und der Sekundärwicklung S1. Dabei ist eine mit der Energieversorgungseinrichtung 13 verbundene Energiemanagementeinrichtung 18 dazu eingerichtet, die Energieversorgungseinrichtung 13 derart zu steuern, dass diese nur Energie an den Primärwicklungen P1, P2 und P3 bereitstellt und nicht an den freien, also nicht überdeckten, Primärwicklungen, beispielsweise den Primärwicklungen P4 und P5. Dazu kann die Energiemanagementeinheit 18 mit der Messeinrichtung 16 und/oder der Auswerteeinrichtung 17 datentechnisch verbunden sein.

Bevorzugt wird die Energie von der Energieversorgungseinrichtung 13 jedoch lediglich an der Primärwicklung P2 bereitgestellt, da diese vollständig mit der Sekundärwicklung S1 überlappt und dadurch ein sehr effizienter Energietransfer sichergestellt werden kann. Die Energiemanagementeinrichtung 18 ist dazu eingerichtet, die Energieversorgungseinrichtung 13 entsprechend zu steuern.

In dem zweiten Modus oder in einem dritten Modus des Systems 1 können dem Touchscreen 7 mittels der Primärwicklungen P1, P2 und P3 und der Sekundärwicklung S1 Unterhaltungsdaten von dem Im-Flug-Unterhaltungssystem 8 bereitgestellt werden. Das Im-Flug-Unterhaltungssystem 8 kann mit einer Datenmanagementeinrichtung 19 verbunden sein, welche dazu eingerichtet ist, das Im-Flug-Unterhaltungssystem 8 derart zu steuern, dass Daten lediglich an den Primärwicklungen P1, P2 und P3 bereitgestellt werden und nicht an den freien Primärwicklungen beispielsweise den Primärwicklungen P4 und P5.

In dem zweiten, dem dritten oder einem vierten Modus des Systems 1 kann das Kabinenmanagementsystem 12 mittels der Primärwicklungen P1, P2 und P3 und der Sekundärwicklung S1 mit dem Paxknopf 11 Daten austauschen. Auch das Kabinenmanagementsystem 12 kann mit einer Datenmanagementeinrichtung 20 verbunden sein, welche dazu eingerichtet ist, das Kabinenmanagementsystem 12 derart zu steuern, dass Daten lediglich an den Primärwicklungen P1, P2 und P3 bereitgestellt werden und nicht an den freien Primärwicklungen, beispielsweise den Primärwicklungen P4 und P5.

Die Datenmanagementeinrichtungen 19 und 20 sind entsprechend der Energiemanagementeinrichtung 18 mit der Messeinrichtung 16 und/oder der Auswerteeinrichtung 17 verbunden.

Das Kabinenmanagementsystem 12 und das Im-Flug-Unterhaltungssystem 8 stellen vorliegend spezielle Ausgestaltungen einer Rechnereinrichtung dar.

Eine Vergleichereinrichtung 22 des Systems 1, welche Bestandteil des Kabinenmanagementsystems 12 sein kann, ist dazu eingerichtet, beispielsweise in einem fünften Modus des Systems 1 die Ist-Position des Sitzes 6 mit einer Soll-Position desselben zu vergleichen und eine Fehlermeldung auszugeben, wenn die Ist-Position von der Soll-Position abweicht. Innerhalb des Kabinenmanagementsystems 12 kann die Vergleichereinrichtung 22 mit einem Bildschirm 23 zur Anzeige der Fehlermeldung verbunden sein. Ferner kann das Kabinenmanagementsystem 12 einen Speicher 24 aufweisen, auf dem die Soll-Positionen der Sitze 6 gespeichert sind, mit welchen die Vergleichereinrichtung 22 die Ist-Positionen der Sitze 6 vergleicht.

Obwohl die vorliegende Erfindung anhand bevorzugter Ausführungsbeispiele vorstehend beschrieben wurde, ist sie darauf nicht beschränkt, sondern auf vielfältige Weise modifizierbar. Insbesondere schließt "ein" keine Vielzahl aus. Ferner sind die vorstehend für das erfindungsgemäße System oder das erfindungsgemäße Luft- oder Raumfahrzeug beschriebenen Weiterbildungen und Ausführungsbeispiele auf das erfindungsgemäße Verfahren entsprechend anwendbar, und umgekehrt.

Selbstverständlich kann die Messeinrichtung 16 auch umgekehrt arbeiten: Sie kann auch eine resultierende Spannung messen. In diesem Fall beaufschlagt die Energieversorgungseinrichtung 13 die Primärwicklungen P1-PN mit einem vorbestimmten Strom.

### Bezugszeichenliste

- 1: System
- 2: Flugzeug
- 3: Schienensystem
- 4: Schiene
- 5: Raster
- 6: Sitz
- 7: Touchscreen
- 8: Im-Flug-Unterhaltungssystem
- 11: Paxknopf
- 12: Kabinenmanagementsystem
- 13: Energieversorgungseinrichtung
- 14: Versorgungskanal
- 15: Passagierserviceeinheit
- 15': Passagierserviceeinheit
- 16: Messeinrichtung
- 17: Auswerteeinrichtung
- 18: Energiemanagementeinrichtung
- 19: Datenmanagementeinrichtung
- 20: Datenmanagementeinrichtung
- 21: Steuereinheit
- 22: Vergleichereinrichtung
- 23: Bildschirm
- 24: Speicher

- I: Strom
- X: Längsrichtung

- IS1: Schwellwert
- IS2: Schwellwert

- P1-PN: Primärwicklungen
- S1-SM: Sekundärwicklungen
- I1-IN: Ströme

## Patentansprüche

1. Luft- oder Raumfahrzeug, aufweisend:
ein Kabinenmanagementsystem (12);
passagierrelevante Einrichtungen (15, 15'); und
ein System (1), mit:
einem ersten Fahrzeugteil (3), welches eine oder mehrere Primärwicklungen (P1-PN) aufweist;
einem zweiten Fahrzeugteil (6), welches eine oder mehrere Sekundärwicklungen (S1-SM) für ein magnetisches Wechselwirken mit der einen oder den mehreren Primärwicklungen (P1-PN) aufweist und relativ zu dem ersten Fahrzeugteil (3) an verschiedenen Positionen anordbar ist;
einer Energieversorgungseinrichtung (13), welche dazu einrichtet ist, in einem ersten Modus des Systems (1) die eine oder mehreren Primärwicklungen (P1-PN) mit einer Spannung oder einem Strom zu beaufschlagen;
einer Messeinrichtung (16), welche dazu eingerichtet ist, einen resultierenden, durch die eine oder mehreren Primärwicklungen (P1-PN) fließenden Strom (I1-IN) bzw. eine resultierende, an der einen oder den mehreren Primärwicklungen (P1-PN) anliegende Spannung zu messen; **gekennzeichnet durch** einer Auswerteeinrichtung (17), welche in Abhängigkeit von dem resultierenden Strom (I1-IN) oder der resultierenden Spannung eine Ist-Position des zweiten Fahrzeugteils (6) relativ zu dem ersten Fahrzeugteil (3) ermittelt;
wobei die Auswerteeinrichtung (17) die Ist-Position des zweiten Fahrzeugteils (6) dem Kabinenmanagementsystem (12) bereitstellt und das Kabinenmanagementsystem (12) die passagierrelevanten Einrichtungen (15, 15'), welche der Ist-Position des zweiten Fahrzeugteils (6) zugeordnet sind, aktiviert.
1.

2. Luft- oder Raumfahrzeug nach Anspruch 1,
**dadurch gekennzeichnet,**
**dass** eine Rechnereinrichtung als das Kabinenmanagementsystem (12) und/oder ein Im-Flug-Unterhaltungssystem (8) des Luft- oder Raumfahrzeugs ausgebildet ist.

3. Luft- oder Raumfahrzeug nach Anspruch 1 oder 2,
**dadurch gekennzeichnet,**
**dass** die passagierrelevanten Einrichtungen als Passagierserviceeinheiten (15, 15') ausgebildet sind.

4. Luft- oder Raumfahrzeug nach wenigstens einem der Ansprüche 1 bis 3,
**dadurch gekennzeichnet,**
**dass** eine Vergleichereinrichtung (22) Bestandteil des Kabinenmanagementsystems (12) des Luft- oder Raumfahrzeugs (2) ist.

5. Luft- oder Raumfahrzeug nach wenigstens einem der Ansprüche 1 bis 4,
**dadurch gekennzeichnet,**
**dass** das erste Fahrzeugteil als ein Sitz (3) und das zweite Fahrzeugteil als eine Sitzschiene (6) des Luft- oder Raumfahrzeugs (2) ausgebildet ist.

6. Verfahren zum Messen einer Ist-Position eines zweiten Fahrzeugteils (6) relativ zu einem ersten Fahrzeugteil (3) für ein Luft- oder Raumfahrzeug (2), mit folgenden Schritten:
Anordnen des zweiten Fahrzeugteils (6), welches eine oder mehrere Sekundärwicklungen (S1-SM) aufweist, benachbart zu dem ersten Fahrzeugteil (3), welches eine oder mehrere Primärwicklungen (P1-PN) aufweist, sodass wenigstens eine Sekundärwicklung (S1-SM) mit wenigstens einer Primärwicklung (P1-PN) magnetisch wechselwirkt;
Beaufschlagen der einen oder mehreren Primärwicklungen (P1-PN) mit einer Spannung oder einem Strom;
Messen eines resultierenden, durch die eine oder mehreren Primärwicklungen (P1-PN) fließenden Stroms (I1-IN) bzw. einer resultierenden, an der einen oder den mehreren Primärwicklungen (P1-PN) anliegenden Spannung; **gekennzeichnet durch**:
Ermitteln der Ist-Position des zweiten Fahzeugteils (6) relativ zu dem ersten Fahrzeugteil (3) in Abhängigkeit von dem resultierenden Strom (I1-IN) bzw. der resultierenden Spannung;
wobei die Ist-Position des zweiten Fahrzeugteils (6) einem Kabinenmanagementsystem (12) des Luft- der Raumfahrzeugs (2) mittels einer Auswerteeinrichtung (17) bereitstellt wird und passagierrelevanten Einrichtungen (15, 15') des Luft- der Raumfahrzeugs (2), welche der Ist-Position des zweiten Fahrzeugteils (6) zugeordnet sind, mittels des Kabinenmanagementsystem (12) aktiviert werden.

7. Verfahren nach Anspruch 6,
**dadurch gekennzeichnet,**
**dass** Energie und/oder Daten mittels der einen oder mehreren Primär- und Sekundärwicklungen auf einen Verbraucher (7; 11) bzw. auf ein Datenein- und/oder Datenausgabegerät (7; 11) des zweiten Fahrzeugteils (6) übertragen werden.

## Claims

1. Aircraft or spacecraft comprising:
a cabin management system (12);
passenger-relevant devices (15, 15'); and
a system (1), having
a first vehicle part (3) that comprises one or multiple primary windings (P1-PN);
a second vehicle part (6) that comprises one or multiple secondary windings (S1-SM) for magnetic interaction with the one or the multiple primary windings (P1-PN) and said second vehicle part may be arranged in different positions relative to the first vehicle part (3);
an energy supplying device (13) that is configured so as when the system (1) is in a first mode said energy supplying system supplies a voltage or a current to the one or multiple primary windings (P1-PN);
a measuring device (16) that is configured so as to measure a resulting current (I1-IN) that is flowing through the one or multiple primary windings (P1-PN) or to measure a resulting voltage that is prevailing at the one or the multiple primary windings (P1-PN);
**characterized by**
an evaluating device (17) that in dependence upon the resulting current (I1-IN) or upon the resulting voltage ascertains an actual position of the second vehicle part (6) relative to the first vehicle part (3);
wherein the evaluating device (17) provides the actual position of the second vehicle part (6) to the cabin management system (12) and the cabin management system (12) activates the passenger-relevant devices (15, 15') that are allocated to the actual position of the second vehicle part (6).

2. Aircraft or spacecraft according to claim 1,
**characterised in that**
a computer device is configured as the cabin management system (12) and/or as an in-flight entertainment system (8) of the aircraft or spacecraft.

3. Aircraft or spacecraft according to claim 1 or 2,
**characterised in that**
the passenger-relevant devices are configured as passenger service units (15, 15').

4. Aircraft or spacecraft according to at least one of claims 1 to 3,
**characterised in that**
a comparator device (22) is a component of the cabin management system (12) of the aircraft or spacecraft (2).

5. Aircraft or spacecraft according to at least one of claims 1 to 4,
**characterised in that**
the first vehicle part is configured as a seat (3) and the second vehicle part is configured as a seat rail (6) of the aircraft or spacecraft (2).

6. Method for measuring an actual position of a second vehicle part (6) relative to a first vehicle part (3) for an aircraft or spacecraft (2), said method comprising the following steps:
arranging the second vehicle part (6), which comprises one or multiple secondary windings (S1-SM), adjacent to the first vehicle part (3), which comprises one or multiple primary windings (P1-PN), with the result that at least one secondary winding (S1-SM) interacts with at least one primary winding (P1-PN) in a magnetic manner;
supplying a voltage or a current to the one or multiple primary windings (P1-PN);
measuring a resulting current (I1-IN) that is flowing through the one or multiple primary windings (P1-PN) or measuring a resulting voltage that is prevailing at the one or the multiple primary windings (P1-PN);
**characterised by**
ascertaining the actual position of the second vehicle part (6) relative to the first vehicle part (3) in dependence upon the resulting current (I1-IN) or upon the resulting voltage;
wherein the actual position of the second vehicle part (6) is provided to a cabin management system (12) of the aircraft or spacecraft (2) by means of an evaluating device (17), and passenger-relevant devices (15, 15') of the aircraft or space craft (2), which are allocated to the actual position of the second vehicle part (6), are activated by means of the cabin management system (12).

7. Method according to claim 6,
**characterised in that**
energy and/or data are transmitted by means of the one or multiple primary and secondary windings to a consumer (7; 11) or to a data inputting and/or data outputting device (7; 11) of the second vehicle part (6).

## Revendications

1. Aéronef ou astronef, présentant :
un dispositif de gestion de cabine (12) ;
des moyens pour passagers (15, 15') ; et
un système (1),
comportant :
une première partie de véhicule (3), qui présente un ou plusieurs enroulements primaires (P1-PN) ;
une seconde partie de véhicule (6), qui présente un ou plusieurs enroulements secondaires (S1-SM) pour une interaction magnétique avec l'un ou les plusieurs enroulements primaires (P1-PN) et qui peut être agencée en différentes positions par rapport à la première partie de véhicule (3) ;
un moyen d'alimentation en énergie (13), qui est adapté pour alimenter en tension ou en courant le ou les plusieurs enroulements primaires (P1-PN) dans un premier mode du système (1) ;
un moyen de mesure (16), qui est disposé pour mesurer un courant résultant (I1-IN) passant à travers l'un ou plusieurs enroulements primaires (P1-PN) ou une tension résultante appliquée à l'un ou aux plusieurs enroulements primaires (P1-PN) ;
**caractérisé par**
un moyen d'exploitation (17), qui détermine une position réelle de la seconde partie de véhicule (6) par rapport à la première partie de véhicule (3) en fonction du courant résultant (I1-IN) ou de la tension résultante ;
dans lequel le moyen d'exploitation (17) fournit au dispositif de gestion de cabine (12) la position réelle de la seconde partie de véhicule (6) et le dispositif de gestion de cabine (12) active les moyens pour passagers (15, 15') qui sont associés à la position réelle de la seconde partie de véhicule (6).

2. Aéronef ou astronef selon la revendication 1, **caractérisé en ce**
**qu'**un moyen de calcul est configuré sous la forme du dispositif de gestion de cabine (12) et/ou d'un moyen de divertissement en vol (8) de l'aéronef ou astronef.

3. Aéronef ou astronef selon la revendication 1 ou 2, **caractérisé en ce**
**que** les moyens pour passagers (15, 15') sont configurés sous la forme d'unités de service pour passagers.

4. Aéronef ou astronef selon au moins une des revendications 1 à 3,
**caractérisé en ce**
**qu'**un moyen de comparateur (22) fait partie du dispositif de gestion de cabine (12) de l'aéronef ou astronef (2).

5. Aéronef ou astronef selon au moins une des revendications 1 à 4,
**caractérisé en ce**
**que** la première partie de véhicule est configurée sous la forme d'un siège (3) et la seconde partie de véhicule sous la forme d'un rail de siège (6) de l'aéronef ou astronef (2).

6. Procédé de mesure d'une position réelle d'une seconde partie de véhicule (6) par rapport à une première partie de véhicule (3) pour un aéronef ou astronef (2), comprenant les étapes suivantes consistant à :
agencer la seconde partie de véhicule (6), qui présente un ou plusieurs enroulements secondaires (S1-SM), de manière adjacente à la première partie de véhicule (3),
qui présente un ou plusieurs enroulements primaires (P1-PN), de telle sorte qu'au moins un enroulement secondaire (S1-SM) interagit magnétiquement avec au moins un enroulement primaire (P1-PN) ;
alimenter le ou les plusieurs enroulements primaires (P1-PN) en tension ou en courant ;
mesurer un courant résultant (I1-IN) passant à travers l'un ou plusieurs enroulements primaires (P1-PN) ou une tension résultante appliquée au l'un ou aux enroulements primaires (P1-PN) ;
**caractérisé par**
la détermination de la position réelle de la seconde partie de véhicule (6) par rapport à la première partie de véhicule (3) en fonction du courant résultant (I1-IN) ou de la tension résultante ;
dans lequel la position réelle de la seconde partie de véhicule (6) est fournie à un dispositif de gestion de cabine (12) de l'aéronef ou astronef (2) à l'aide d'un moyen d'exploitation (17) et des moyens pour passagers (15, 15') de l'aéronef ou astronef (2), qui sont associés à la position réelle de la seconde partie de véhicule (6), sont activés à l'aide du dispositif de gestion de cabine (12).

7. Procédé selon la revendication 6,
**caractérisé en ce**
**que** l'énergie et/ou les données sont transmises, à l'aide de l'un ou plusieurs enroulements primaires et secondaires, à un consommateur (7 ; 11) ou à un appareil d'entrée et/ou de sortie de données (7 ; 11) de la seconde partie de véhicule (6).
